# EUROPEAN PATENT APPLICATION

(11) **EP 4 686 972 A1**
(43) Date of publication of application: **04.02.2026**
(21) Application number: 25193435.2
(22) Date of filing: 01.08.2025
(51) Int. Cl.: G02B 6/38, G02B 6/42

(54) **OPTICAL-FIBER ADAPTER**

(30) Priority: 01.08.2024 US 202463678260 P
(71) Applicant: Acon Optics Communications Inc., New Taipai City 231 (TW)
(72) Inventor: CUI, Yang-Yang, New Taipei City 231 (TW); ZHANG, Rui, New Taipei City 231 (TW)
(74) Representative: Viering, Jentschura & Partner mbB Patent- und Rechtsanwälte

(57) **Abstract**

An optical-fiber adapter (100) includes an adapter body (1), a base component (2), and a conductive module (3). Two ends of the adapter body (1) respectively have a first mating side (11) and a second mating side (12), four side walls of the adapter body (1) define a first receiving cavity (10a) and a second receiving cavity (10b). The first mating side (11) of the adapter body (1) has a first insertion opening (111) in communication with the first receiving cavity (10a), and the second mating side (12) of the adapter body (1) has a second insertion opening (121) in communication with the second receiving cavity (10b). The base component (2) is retained between the first receiving cavity (10a) and the second receiving cavity (10b). The conductive module (3) includes a plurality of conductive terminals (32). One of two ends of each of the conductive terminals (32) is in the first receiving cavity (10a), and the other end of each of the conductive terminals (32) is in the second receiving cavity (10b).

## Description

### FIELD OF THE INVENTION

The instant disclosure relates to an adapter, and more particular to an optical-fiber adapter.

### BACKGROUND

The optical-fiber cable serves as a tool for optical transmission. An optical-fiber connector assembly includes a female adapter and two male optical-fiber connectors respectively mated with two ends of the female adapter. Therefore, engagement and data transmission between the adapter and the connectors can be achieved. A lucent connector (LC) type optical-fiber adapter known to the inventor is utilized as an optical transmission connector for LC-type optical-fiber cables to transmit optical signals. However, the LC-type adapter fails to provide additional functions.

### SUMMARY OF THE INVENTION

In view of these, one or some embodiments of the instant disclosure provide an optical-fiber adapter. The optical-fiber adapter comprises an adapter body, a base component, and a conductive module. Two ends of the adapter body respectively have a first mating side and a second mating side. Four side walls of the adapter body define a first receiving cavity and a second receiving cavity, the first mating side of the adapter body has a first insertion opening in communication with the first receiving cavity, and the second mating side of the adapter body has a second insertion opening in communication with the second receiving cavity. The four side walls of the adapter body are a first side wall, a second side wall, a blocking wall, and a combining base wall, respectively. The first side wall and the second side wall of the adapter body are respectively connected to two sides of the combining base wall and two sides of the blocking wall. The base component is retained between the first receiving cavity and the second receiving cavity. The conductive module comprises a plurality of conductive terminals. One of two ends of each of the conductive terminals is retained in the first receiving cavity, and the other end of each of the conductive terminals is retained in the second receiving cavity.

In some embodiments, the conductive module comprises a terminal base combined with the conductive terminals. The terminal base comprises a base portion, a first tongue portion outward extending from one of two sides of the base portion, and a second tongue portion outward extending from the other side of the base portion. The first tongue portion is in the first receiving cavity, the second tongue portion is in the second receiving cavity, and the terminal base abuts against the base component.

In some embodiments, the one end of each of the conductive terminals has a first mating portion, the first mating portions of the conductive terminals are arranged at two sides of the first tongue portion, the other end of each of the conductive terminals has a second mating portion, the second mating portions of the conductive terminals are arranged at two sides of the second tongue portion, and each of the first mating portions and a corresponding one of the second mating portions are arranged along a same axis.

In some embodiments, the terminal base has an engaging block at one side of the base portion, and the terminal base has first positioning portions at two sides of the base portion.

In some embodiments, the adapter body has a plurality of second positioning portions and a plurality of second guiding rails. The second positioning portions are at an inner side of the first side wall and an inner side of the second side wall, and the second guiding rails are at the inner side of the first side wall and the inner side of the second side wall. Each of the second guiding rails and a corresponding one of the second positioning portions are arranged along a same axis, and each of the first positioning portions is placed into the corresponding one of the second positioning portions through the corresponding one of the second guiding rails so as to be engaged with the corresponding one of the second positioning portions.

In some embodiments, the base component comprises a main body and a first socket at one side of the main body, the base component comprises a sleeve member, and one of two ends of the sleeve member is adapted to be inserted into the first socket.

In some embodiments, the adapter body comprises a partition portion and a second socket, the partition portion is between the first receiving cavity and the second receiving cavity, the second socket extends toward the second insertion opening from the partition portion, the other end of the sleeve member is adapted to be inserted into the second socket, and the adapter body comprises a through hole at the partition portion.

In some embodiments, the adapter body has a plurality of inner protrusions, and the inner protrusions are at the inner side of the first side wall and the inner side of the second side wall. The main body of the base component is adapted to be assembled in the first receiving cavity through the first insertion opening of the adapter body, and the inner protrusions abut against the two sides of the main body.

In some embodiments, the adapter body has a plurality of first engaging portions, the first engaging portions are at the inner side of the first side wall and the inner side of the second side wall and are adjacent to the inner protrusions, and the base component comprises second engaging portions at the two sides of the main body.

In some embodiments, the adapter body has a plurality of first guiding rails, the first guiding rails are at the inner side of the first side wall and the inner side of the second side wall and are arranged along a same axis, and each of the second engaging portions is placed into the corresponding one of the first engaging portions through the corresponding one of the first guiding rails so as to be engaged with the corresponding one of the first engaging portions.

According to one or some embodiments of the instant disclosure, through the configuration that the conductive module is provided in the adapter body of the optical-fiber adapter, the optical-fiber adapter can transmit both optical signals and electric power.

### BRIEF DESCRIPTION OF THE DRAWINGS

The instant disclosure will become more fully understood from the detailed description given herein below for illustration only, and thus not limitative of the instant disclosure, wherein:
Fig. 1 illustrates a perspective view of an optical-fiber adapter according to an exemplary embodiment of the disclosure;
Fig. 2 illustrates an exploded view of the optical-fiber adapter of the exemplary embodiment of the instant disclosure;
Fig. 3 illustrates an exploded sectional view of the optical-fiber adapter of the exemplary embodiment of the instant disclosure, where the optical-fiber adapter is not assembled yet;
Fig. 4 illustrates an assembled sectional view of the optical-fiber adapter of the exemplary embodiment of the instant disclosure;
Fig. 5 illustrates a front perspective view of the optical-fiber adapter of the exemplary embodiment of the instant disclosure;
Fig. 6 illustrates a back perspective view of the optical-fiber adapter of the exemplary embodiment of the instant disclosure;
Fig. 7 illustrates a side schematic view of the optical-fiber adapter of the exemplary embodiment of the instant disclosure;
Fig. 8 illustrates a perspective view of the optical-fiber adapter of the exemplary embodiment of the instant disclosure, where the optical-fiber adapter is to be mated with several optoelectronic connectors;
Fig. 9 illustrates a side sectional view of the optical-fiber adapter of the exemplary embodiment of the instant disclosure, where the optical-fiber adapter is to be mated with several optoelectronic connectors; and
Fig. 10 illustrates a side sectional view of the optical-fiber adapter of the exemplary embodiment of the instant disclosure, where the optical-fiber adapter is mated with several optoelectronic connectors.

### DETAILED DESCRIPTION

To enable persons having ordinary skills in the art to better understand and implement, the purposes, technical features, and advantages of the instant disclosure, the technical features and implementation methods of the instant disclosure are described in detail in the following paragraphs in conjunction with the accompanying drawings, and preferred embodiments are enumerated for further illustration. However, the following embodiments are not intended to limit the claim scope of the instant disclosure, and the drawings referenced in the following paragraphs are schematic representations related to the features of the instant disclosure.

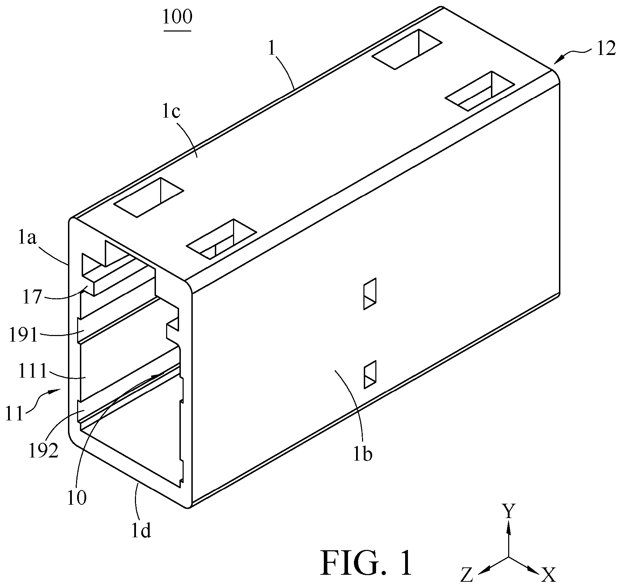

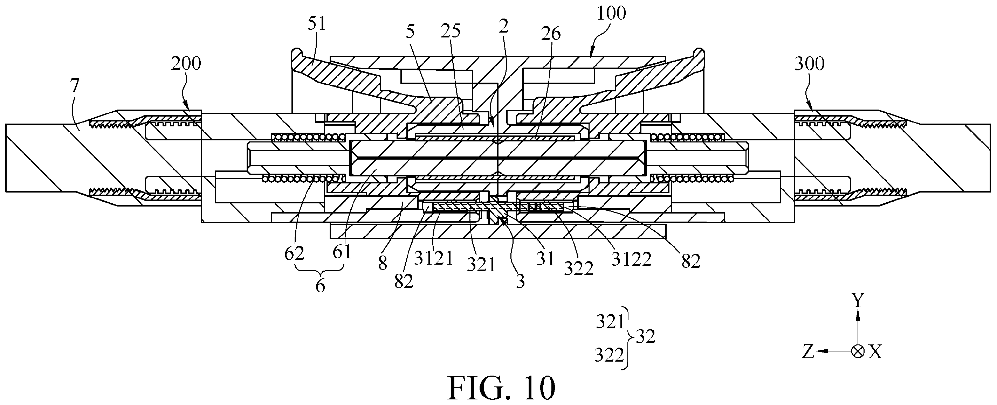

Please refer to Fig. 1. Fig. 1 illustrates a perspective view of an optical-fiber adapter 100. The optical-fiber adapter 100 is adapted to be utilized in a vehicle and to be inserted by optoelectronic connectors (as shown in Fig. 10), and the optical-fiber adapter 100 is provided for optical signal and electric power transmission. The optical-fiber adapter 100 is mounted on the vehicle; when the user wants to replace new optoelectronic connectors or a new adapter with the old ones, the user just needs to detach the optoelectronic connectors from the optical-fiber adapter 100, rather than cutting the transmission wires connected to the optoelectronic connectors.

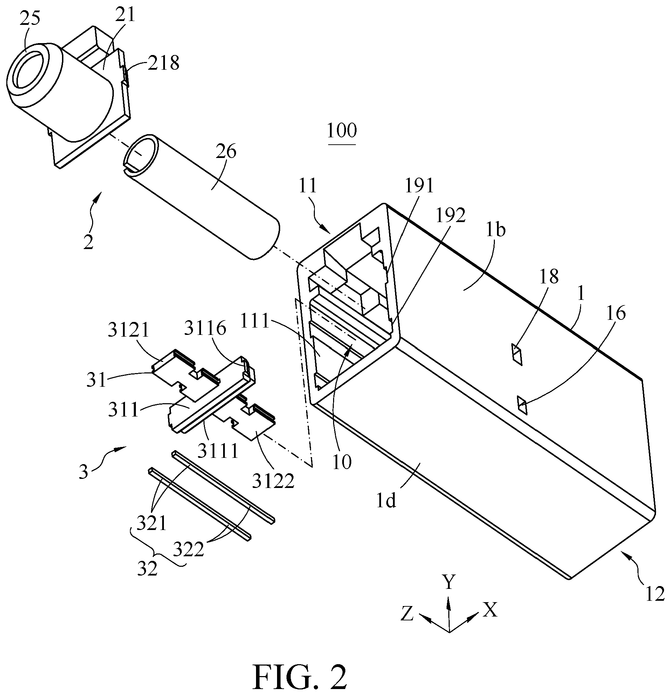

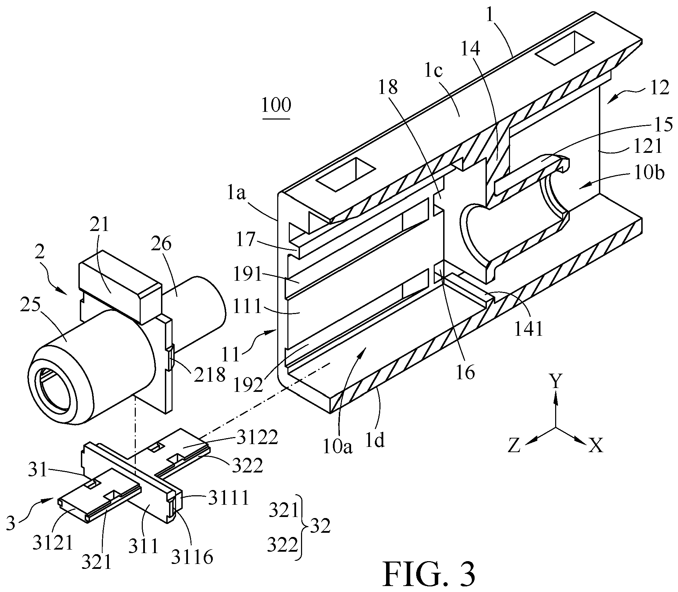

Please refer to Fig. 2 and Fig. 3. Fig. 2 illustrates an exploded view of the optical-fiber adapter 100. Fig. 3 illustrates an exploded sectional view of the optical-fiber adapter 100, where the optical-fiber adapter 100 is not assembled yet. The adapter body 1 is a hollow rectangular structure. Two ends of the adapter body 1 respectively have a first mating end 11 and a second mating end 12. Four side walls of the adapter body 1 define a first receiving cavity 10a and a second receiving cavity 10b in communication with each other. The first mating side 11 of the adapter body 1 has a first insertion opening 111 in communication with the first receiving cavity 10a, and the second mating side 12 of the adapter body 1 has a second insertion opening 121 in communication with the second receiving cavity 10b. The first insertion opening 111 and the second insertion opening 121 of the adapter body 1 are respectively provided for being inserted by two optoelectronic connectors, so that the optical-fiber adapter 1 provides a configuration that two sides of the optical-fiber adapter 1 are being inserted by two optoelectronic connectors.

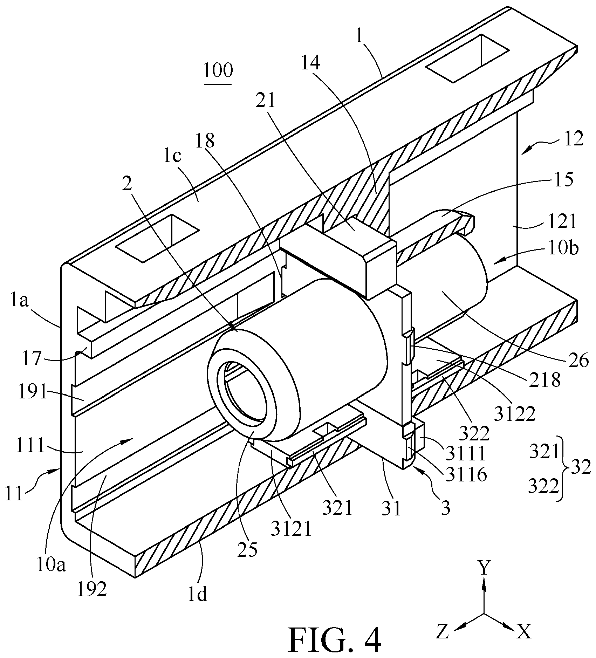

Please refer to Fig. 2 to Fig. 4. Fig. 4 illustrates an assembled sectional view of the optical-fiber adapter 100. The four side walls of the adapter body 1 are a first side wall 1a, a second side wall 1b, a blocking wall 1c, and a combining base wall 1d, respectively. The first side wall 1a and the second side wall 1b are arranged along the second axis (Y direction), and the blocking wall 1c and the combining base wall 1d are arranged along the first axis (X direction). The first side wall 1a and the second side wall 1b are respectively connected to two sides of the combining base wall 1d and two sides of the blocking wall 1c.

Please refer to Fig. 2 to Fig. 4. In some embodiments, the adapter body 1 has a plurality of second positioning portions 16, the second positioning portions 16 are at an inner side of the first side wall 1a and an inner side of the second side wall 1b. In this embodiment, the second positioning portion 16 is a positioning hole, but the instant disclosure is not limited thereto; in some other embodiments, the second positioning portion 16 may be a protruding block.

Please refer to Fig. 2 to Fig. 4. In some embodiments, the adapter body 1 has a plurality of first engaging portions 18. In this embodiment, the first engaging portion 18 is an engaging hole, but the instant disclosure is not limited thereto; in some other embodiments, the first engaging portion 18 may be a protruding block. The first engaging portions 18 are at the inner side of the first side wall 1a and the inner side of the second side wall 1b. The base component 2 comprises second engaging portions 218 at two sides of the main body 21. In this embodiment, the second engaging portion 218 is a protruding block, but the instant disclosure is not limited thereto; in some other embodiments, the second engaging portion 218 may be an engaging hole. When the base component 2 is assembled in the first receiving cavity 10a, each of the second engaging portions 218 is engaged with a corresponding one of the first engaging portions 18.

Please refer to Fig. 2 to Fig. 4. In some embodiments, the adapter body 1 has a plurality of first guiding rails 191, the first guiding rails 191 are at the inner side of the first side wall 1a and the inner side of the second side wall 1b, and each of the first guiding rails 191 and a corresponding one of the first engaging portions 18 are arranged along a same axis (as shown in Fig. 3, along the third axis (Z direction)). When each of the second engaging portions 218 is placed into the corresponding one of the first engaging portions 18 through the corresponding one of the first guiding rails 191, each of the second engaging portions 218 is mated and engaged with the corresponding one of the first engaging portions 18 along the corresponding one of the first guiding rails 191. In this embodiment, a portion of the first guiding rail 191 adjacent to the first engaging portion 18 has an inclined surface, thereby facilitating in guiding the second engaging portion 218 to be engaged with the first engaging portion 18.

Please refer to Fig. 2 to Fig. 4. In some embodiments, the two sides of the base portion 311 comprise first positioning portion 3116. In this embodiment, the first positioning portion 3116 is a protruding block, but the instant disclosure is not limited thereto; in some other embodiments, the first positioning portion 3116 may be a positioning hole.

Please refer to Fig. 2 to Fig. 4. In some embodiments, the adapter body 1 has a plurality of second guiding rails 192, the second guiding rails 192 are at the inner side of the first side wall 1a and the inner side of the second side wall 1b, and each of the second guiding rails 192 and a corresponding one of the second positioning portions 16 are arranged along a same axis (as shown in Fig. 3, along the third axis (Z direction)). When each of the first positioning portions 3116 is placed into the corresponding one of the second positioning portions 16 through the corresponding one of the second guiding rails 192, each of the first positioning portions 3116 is mated and engaged with the corresponding one of the second positioning portions 16 along the corresponding one of the second guiding rails 192. In this embodiment, a portion of the second guiding rail 192 adj acent to the second positioning portion 16 has an inclined surface, thereby facilitating in guiding the first positioning portion 3116 to be engaged with the second positioning portion 16.

Please refer to Fig. 3 and Fig. 4. In some embodiments, the adapter body 1 has a plurality of inner protrusions 17 configured as an elongated blocks and arranged along the third axis (Z direction). The inner protrusions 17 are at the inner side of the first side all 1a and the inner side of the second side wall 1b, and the inner protrusions 17 are opposite to each other. When the base component 2 is assembled in the first receiving cavity 10a, the main body 21 of the base component 2 is adapted to be aimed at and assembled into the first receiving cavity 10a from the first insertion opening 111 of the adapter body 11. Next, the inner protrusions 17 abut against the two sides of the main body 21, so that the base component 2 can be stably retained in the first receiving cavity 10a.

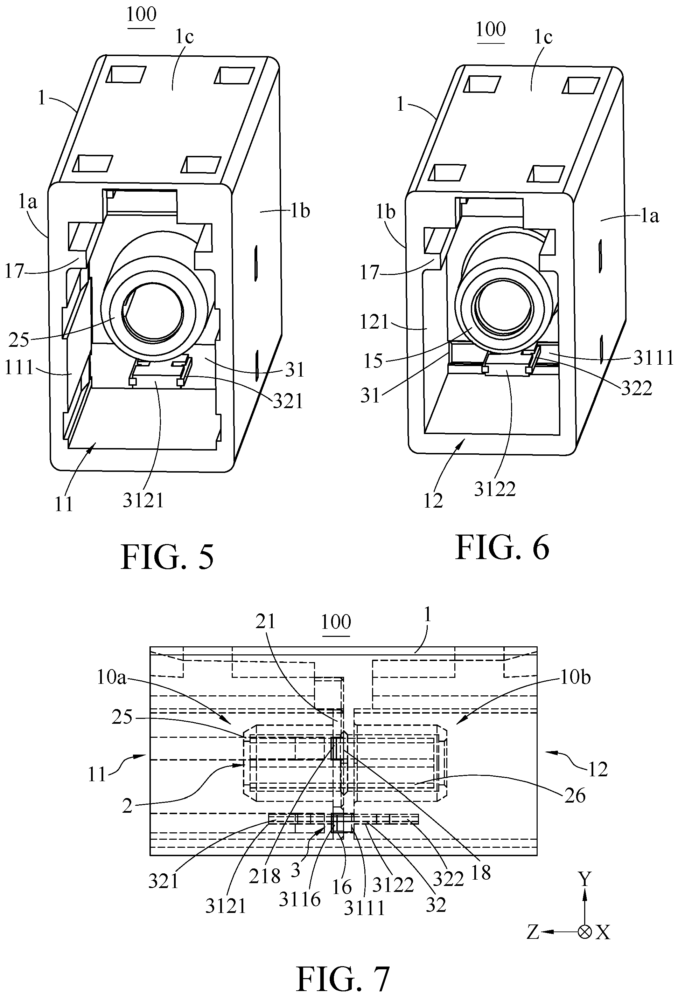

Please refer to Fig. 2 and Fig. 5 to Fig. 7. Fig. 5 illustrates a front perspective view of the optical-fiber adapter 100. Fig. 6 illustrates a back perspective view of the optical-fiber adapter 100. Fig. 7 illustrates a side schematic view of the optical-fiber adapter 100. The base component 2 is retained between the first receiving cavity 10a and the second receiving cavity 10b. The base component 2 comprises a main body 21, a first socket 25 at one side of the main body 21, and a sleeve member 26. One of two ends of the sleeve member 26 is adapted to be inserted into the first socket 25. In some embodiments, the sleeve member 26 is formed of ceramic. The sleeve member 26 is an elongated tube and has a cut groove extending longitudinally, and a cross-section of the sleeve member 26 is formed as a C-shape structure. When the base component 2 is assembled in the adapter body 1, the base component 2 is placed in the first receiving cavity 10a through the first insertion opening 111, so that the base component 2 is in the first receiving cavity 10a and is approximately at a middle portion of the adapter body 1, and the base component 2 is retained between the first receiving cavity 10a and the second receiving cavity 10b. When an optoelectronic connector is inserted into the optical-fiber adapter 100, the insertion pin 61 of the optoelectronic connector is inserted into the sleeve member 26 with the C-shaped structure, and the cut groove allows the sleeve member 26 to be expandable (as shown in Fig. 10).

Please refer to Fig. 2 and Fig. 5 to Fig. 7. The conductive module 3 comprises a plurality of conductive terminals 32. One of two ends of each of the conductive terminals 32 has a first mating portion 321, and the first mating portions 321 are arranged at two sides of the first tongue portion 3121. The other end of each of the conductive terminals 32 has a second mating portion 322, and the second mating portions 322 are arranged at two sides of the second tongue portion 3122. For each of the conductive terminals 32, the first mating portion 321 and the second mating portion 322 are arranged along a same axis (as shown in Fig. 3, along the third axis (Z direction)). When the conductive module 3 is assembled in the adapter body 1, the first tongue portion 3121 is in the first receiving cavity 10a, the second tongue portion 3122 is in the second receiving cavity 10b, the one end of each of the conductive terminals 32 is retained in the first receiving cavity 10, and the other end of each of the conductive terminals 32 is retained in the second receiving cavity 10b.

Please refer to Fig. 3 and Fig. 5 to Fig. 7. In some embodiments, the adapter body 1 comprises a partition portion 14 and a second socket 15; the partition portion 14 is a standing wall and arranged in the adapter body 1 along the second axis (Y direction). During the manufacturing process, the partition portion 14 and the second socket 15 are integrally formed with the adapter body 1. The partition portion 14 separates the first receiving cavity 10a from the second receiving cavity 10b, the second socket 14 are in the second receiving cavity 10b, and the second socket 15 extends toward the second insertion opening 121 from the partition portion 14.

Please refer to Fig. 3 and Fig. 5 to Fig. 7. In some embodiments, the adapter body 1 comprises a through hole 141 at the partition portion 14, and the terminal base 31 has an engaging block 3111 at one side of the base portion 311. The engaging block 3111 is an elongated rectangular block and the size of the engaging block 3111 is less than the size of the base portion 311, and the second tongue portion 3122 outward extends from one side of the engaging block 3111. When the terminal base 31 is assembled in the first receiving cavity 10a through the first insertion opening 111, the second tongue portion 3122 passes through the through hole 141, the engaging block 3111 is engaged with the through hole 141, and the terminal base 31 abuts against a bottom portion of the base component 2.

Please refer to Fig. 3 and Fig. 5 to Fig. 7. In some embodiments, the conductive module 3 comprises a terminal base 31 combined with the conductive terminals 32. The terminal base 31 and the conductive terminals 32 are combined with each other during the injection molding process where the terminal base 31 and the conductive terminals 32 are formed with each other in the molding. The terminal base 31 comprises a base portion 311, a first tongue portion 3121 outward extending from one of two sides of the base portion 311, and a second tongue portion 3122 outward extending from the other side of the base portion 3122. The base portion 311 is an elongated rectangular block, a long side of the base portion 311 is arranged along the first axis (X direction), and a short side of the base portion 311 is arranged along the second axis (Y direction). The first tongue portion 3121 faces the first insertion opening 111 and is arranged along the third axis (Z direction), and the second tongue portion 3122 faces the second insertion opening 121 and is arranged along the third axis (Z direction). Viewing from the second axis (Y direction), the first tongue portion 3121, the second tongue portion 3122, and the base portion 311 are approximately formed as a cross structure, and viewing from the first axis (X direction), the first tongue portion 3121, the second tongue portion 3122, and the base portion 311 are approximately formed as a cross structure.

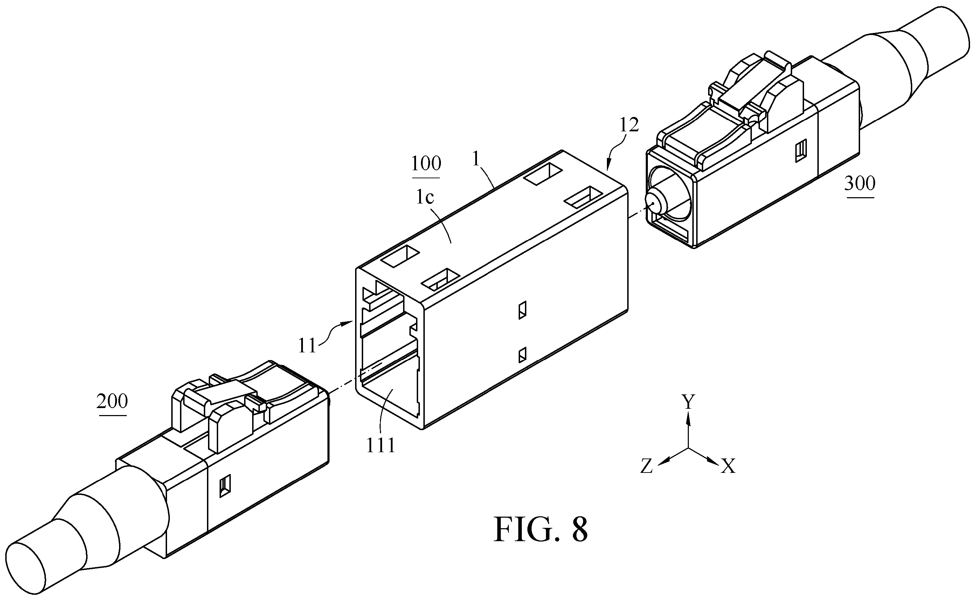

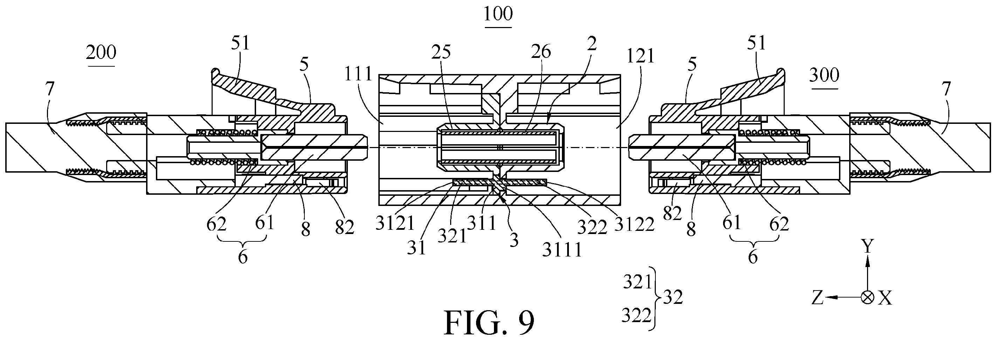

Please refer to Fig. 3 and Fig. 8 to Fig. 10. Fig. 8 illustrates a perspective view of the optical-fiber adapter 100, where the optical-fiber adapter 100 is to be mated with several optoelectronic connectors. Fig. 9 illustrates a side sectional view of the optical-fiber adapter 100, where the optical-fiber adapter 100 is to be mated with several optoelectronic connectors. Fig. 10 illustrates a side sectional view of the optical-fiber adapter 100, where the optical-fiber adapter 100 is mated with several optoelectronic connectors. The first insertion opening 111 and the second insertion opening 121 of the adapter body 1 of the optical-fiber adapter 100 are respectively adapted to be inserted by a first optoelectronic connector 200 and a second optoelectronic connector 300. The first optoelectronic connector 200 and the second optoelectronic connector 300 have identical structures. Each of the first optoelectronic connector 200 and the second optoelectronic connector 300 comprises a coupling member 5 and a flexible arm 51 on the coupling member 5. A core component 6 is in the coupling member 5, and the core component 6 comprises an insertion pin 61 and a spring 62 fitted over the insertion pin 61. The insertion pin 61 of the core component 6 is exposed from one of two ends of the coupling member 5, a tail cap 7 is fitted over the other end of the coupling member 5, and the tail cap 7 may be fitted over a transmission wire. Each of the first optoelectronic connector 200 and the second optoelectronic connector 300 comprises an electrical connection module 8 at a bottom portion of the coupling member 5, and the electrical connection module 8 has a plurality of electrical connection terminals 82.

Please refer to Fig. 3 and Fig. 8 to Fig. 10. When the first optoelectronic connector 200 and the second optoelectronic connector 300 are respectively inserted into the first insertion opening 111 and the second insertion opening 121, the electrical connection module 8 of the first optoelectronic connector 200 and the electrical connection module 8 of the second optoelectronic connector 300 contact the conductive module 3 of the optical-fiber adapter 100, thereby achieving the electric power transmission. Moreover, the insertion pins 61 of the core components 6 of the first optoelectronic connector 200 and the second optoelectronic connector 300 are mated with the base component 2, thereby achieving the optical signal transmission. According to one or some embodiments of the instant disclosure, through the combined optoelectronic transmission, after the optoelectronic connector is mated with the optical-fiber adapter 100, the signal can be transmitted stably, thereby meeting the requirements of complex automotive environments and satisfying waterproofing, vibration resistance, corrosion resistance, and high temperature/high humidity testing standards.

According to one or some embodiments of the instant disclosure, through the configuration that the conductive module 3 is provided in the adapter body 1 of the optical-fiber adapter 100, the optical-fiber adapter 100 can transmit both optical signals and electric power.

## Claims

1. An optical-fiber adapter (100) comprising:
an adapter body (1), wherein two ends of the adapter body (1) respectively have a first mating side (11) and a second mating side (12); four side walls of the adapter body (1) define a first receiving cavity (10a) and a second receiving cavity (10b) in communication with each other, the first mating side (11) of the adapter body (1) has a first insertion opening (111) in communication with the first receiving cavity (10a), and the second mating side (12) of the adapter body (1) has a second insertion opening (121) in communication with the second receiving cavity (10b); the four side walls of the adapter body (1) are a first side wall (1a), a second side wall (1b), a blocking wall (1c), and a combining base wall (1d), respectively; the first side wall (1a) and the second side wall (1b) of the adapter body (1) are respectively connected to two sides of the combining base wall (1d) and two sides of the blocking wall (1c);
a base component (2) retained between the first receiving cavity (10a) and the second receiving cavity (10b); and
a conductive module (3) comprising a plurality of conductive terminals (32), wherein one of two ends of each of the conductive terminals (32) is retained in the first receiving cavity (10a), and the other end of each of the conductive terminals (32) is retained in the second receiving cavity (10b).

2. The optical-fiber adapter (100) according to claim 1, wherein the conductive module (3) comprises a terminal base (31) combined with the conductive terminals (32), the terminal base (31) comprises a base portion (311), a first tongue portion (3121) outward extending from one of two sides of the base portion (311), and a second tongue portion (3122) outward extending from the other side of the base portion (311), the first tongue portion (3121) is in the first receiving cavity (10a), the second tongue portion (3122) is in the second receiving cavity (10b), and the terminal base (31) abuts against the base component (2).

3. The optical-fiber adapter (100) according to claim 2, wherein the one end of each of the conductive terminals (32) has a first mating portion (321), the first mating portions (321) of the conductive terminals (32) are arranged at two sides of the first tongue portion (3121), the other end of each of the conductive terminals (32) has a second mating portion (322), the second mating portions (322) of the conductive terminals (32) are arranged at two sides of the second tongue portion (3122), and each of the first mating portions (321) and a corresponding one of the second mating portions (322) are arranged along a same axis.

4. The optical-fiber adapter (100) according to claim 2, wherein the terminal base (31) has an engaging block (3111) at one side of the base portion (311), and the terminal base (31) has first positioning portions (3116) at two sides of the base portion (311).

5. The optical-fiber adapter (100) according to claim 4, wherein the adapter body (1) has a plurality of second positioning portions (16) and a plurality of second guiding rails (192), the second positioning portions (16) are at an inner side of the first side wall (1a) and an inner side of the second side wall (1b), the second guiding rails (192) are at the inner side of the first side wall (1a) and the inner side of the second side wall (1b), each of the second guiding rails (192) and a corresponding one of the second positioning portions (16) are arranged along a same axis, and each of the first positioning portions (3116) is placed into the corresponding one of the second positioning portions (16) through the corresponding one of the second guiding rails (192) so as to be engaged with the corresponding one of the second positioning portions (16).

6. The optical-fiber adapter (100) according to claim 1, wherein the base component (2) comprises a main body (21) and a first socket (25) at one side of the main body (21), the base component (2) comprises a sleeve member (26), and one of two ends of the sleeve member (26) is adapted to be inserted into the first socket (25).

7. The optical-fiber adapter (100) according to claim 6, wherein the adapter body (1) comprises a partition portion (14) and a second socket (15), the partition portion (14) is between the first receiving cavity (10a) and the second receiving cavity (10b), the second socket (15) extends toward the second insertion opening (121) from the partition portion (14), the other end of the sleeve member (26) is adapted to be inserted into the second socket (15), and the adapter body (1) comprises a through hole (141) at the partition portion (14).

8. The optical-fiber adapter (100) according to claim 6, wherein the adapter body (1) has a plurality of inner protrusions (17), the inner protrusions (17) are at the inner side of the first side wall (1a) and the inner side of the second side wall (1b), the main body (21) of the base component (2) is adapted to be assembled in the first receiving cavity (10a) through the first insertion opening (111) of the adapter body (1), and the inner protrusions (17) abut against two sides of the main body (21).

9. The optical-fiber adapter (100) according to claim 8, wherein the adapter body (1) has a plurality of first engaging portions (18), the first engaging portions (18) are at the inner side of the first side wall (1a) and the inner side of the second side wall (1b) and are adjacent to the inner protrusions (17), and the base component (2) comprises second engaging portions (218) at the two sides of the main body (21).

10. The optical-fiber adapter (100) according to claim 9, wherein the adapter body (1) has a plurality of first guiding rails (191), the first guiding rails (191) are at the inner side of the first side wall (1a) and the inner side of the second side wall (1b) and are arranged along a same axis, and each of the second engaging portions (218) is placed into the corresponding one of the first engaging portions (18) through the corresponding one of the first guiding rails (191) so as to be engaged with the corresponding one of the first engaging portions (18).
